# EUROPÄISCHE PATENTSCHRIFT

(11) **EP 1 061 671 B1**
(45) Veröffentlichungstag und Bekanntmachung des Hinweises auf die Patenterteilung: **19.10.2011**
(21) Anmeldenummer: 00112218.3
(22) Anmeldetag: 07.06.2000
(51) Int. Cl.: H04B 7/26

(54) **Verfahren zur Steuerung des Datenflusses von Terminals in zentralgesteuerten Kommunikationssystemen**
Method of control of data streams of terminals in central controlled communication systems
Procédé de commande de flux de données de terminaux dans des systèmes de communications commandés centralement

(30) Priorität: 16.06.1999 DE 19927544
(43) Veröffentlichungstag der Anmeldung: 20.12.2000
(73) Patentinhaber: ROBERT BOSCH GMBH, 70442 Stuttgart (DE)
(72) Erfinder: Vollmer, Vasco, 29471 Gartow (DE); Radimirsch, Markus, 30880 Laatzen (DE)

(56) Entgegenhaltungen:
- DE-A1- 19 726 120
- D. PETRAS, A. KRÄMLING: "MAC protocol with polling and fast collision resolution for an ATM air interface" IEEE ATM WORKSHOP, August 1996 (1996-08), XP002504443 San Francisco, Ca
- PETRAS D ET AL: "MAC protocol for wireless ATM: contention free versus contention based transmission of reservation requests" PERSONAL, INDOOR AND MOBILE RADIO COMMUNICATIONS, 1996. PIMRC'96., SEV ENTH IEEE INTERNATIONAL SYMPOSIUM ON TAIPEI, TAIWAN 15-18 OCT. 1996, NEW YORK, NY, USA,IEEE, US, Bd. 3, 15. Oktober 1996 (1996-10-15), Seiten 903-907, XP010209094 ISBN: 978-0-7803-3692-6

## Beschreibung

Stand der Technik

Die Erfindung geht aus von einem Verfahren zur Steuerung des Datenflusses von Terminals in zentral gesteuerten Kommunikationssystemennach dem Oberbegriff des Aspruchs 1.

Ein solches Verfahren ist bekannt aus D. PETRAS, A. KRÄMLlNG: "MAC protocol with polling and fast collision resolution for an ATM air interface", IEEE ATM WORKSHOP, August 1996 (1996-08), San Francisco, Ca.

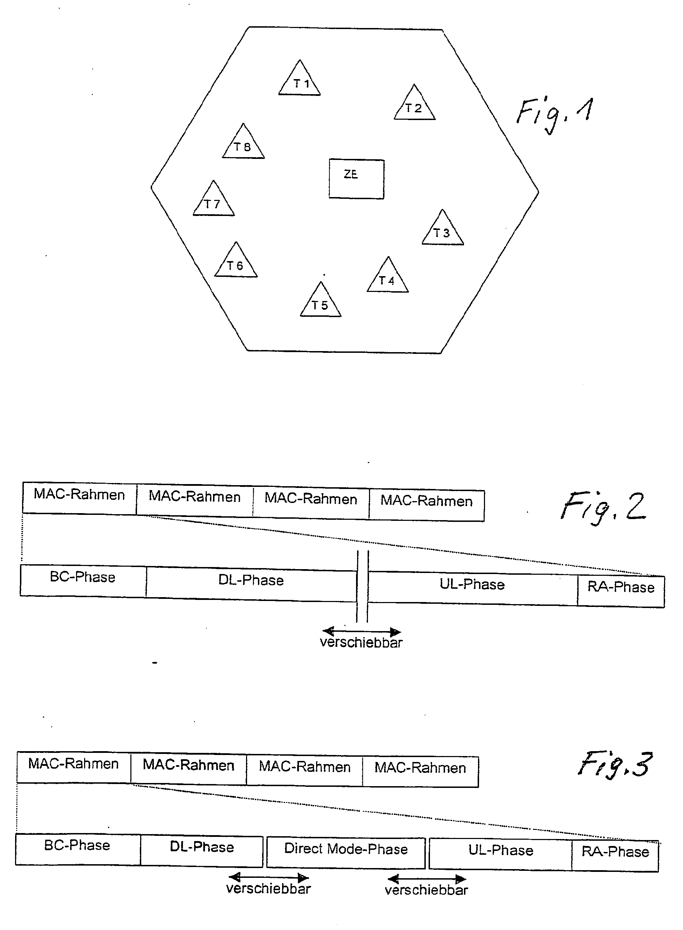

In einem Kommunikationssystem gemäß Figur 1 werden mehrere Terminals T1 ... T8, beispielsweise Funktelefone, PCs oder andere funk- oder leitungsgebundene Endgeräte, von einer Zentrale ZE koordiniert. Die Kommunikation erfolgt beispielsweise per Funk. Es ist auch möglich, daß die Terminals direkt miteinander kommunizieren, wobei sie von der Zentrale ZE koordiniert werden. Dabei teilen die Terminals der Zentrale ZE den Zustand ihrer Puffer, insbesondere den Füllstand von Sende- und Empfangspuffer mit und die Zentrale teilt den Terminals die Ressourcen zu. Die Zuteilung von Übertragungskapazität in einem solchen Kommunikationsnetz geht beispielsweise aus [1] bis [3] hervor. Dazu wird üblicherweise ein MAC-Kanalzugriffsprotokoll (Medium Access Control) verwendet.

Zur Anforderung von Ressourcen durch ein Terminal versendet dieses eine sogenannte Ressource Request (RR)- Nachricht, in der sie ihre Bedürfnisse der Zentrale ZE mitteilt. RR-Nachrichten gelten für eine einzelne DLC (Data link Control)-Verbindung und enthalten die Anzahl der Nachrichten, die in den Puffern des Terminals auf Übertragung warten. Dabei ist wichtig, daß die Anzahl der wartenden Nachrichten im Puffer die Kapazität eines einzelnen MAC-Übertragungsrahmens weit übersteigen kann. Die Zentrale ZE vergibt die Kapazitäten der einzelnen Phasen eines MAC-Übertragungsrahmens wiederum auf der Basis einzelner DLC-Verbindungen. Für die Downlink-Phase (Zentrale in Richtung Terminal) kündigt sie an, welches Terminal welche Nachricht empfangen soll, für die Uplink-Phase (Terminal in Richtung Zentrale) wird angekündigt, welches Terminal zu einem bestimmten Zeitpunkt für eine DLC-Verbindung senden darf. Für den Direct Mode Kanal (direkte Kommunikation der Terminals untereinander) werden Sender und Empfänger und die DLC-Verbindung angekündigt.

Hierbei ist zu beachten, daß die RR-Nachrichten immer den aktuellen Füllstand des Puffers angeben sollen. Um Kapazität entsprechend des Füllstandes von der Zentrale ZE zugewiesen zu bekommen, ist es nicht ratsam, daß ein Terminal weniger als den aktuellen Füllstand an die Zentrale ZE weitergibt, da die Dringlichkeit der Übertragung von der Zentrale ZE sonst unter Umständen falsch eingeschätzt wird.

Es gibt bereits Flußsteuerungsmechanismen, die dazu dienen, daß ein Terminal der Zentrale ZE oder auch eine Zentrale ZE einem Terminal mitteilen kann, daß sie für eine bestimmte DLC-Verbindung nichts empfangen möchte (Start-Stop Protokoll). Dies geschieht im Zusammenhang mit dem ARQ (Automatic Repeat Request) -Protokoll und dient dazu, Empfangspufferüberläufe zu verhindern.

### Vorteile der Erfindung

Mit den Maßnahmen des Anspruchs 1 kann eine Regulierung des Sendeflusses eines Terminals auf einfache Weise vorgenommen werden. In den Unteransprüchen sind vorteilhafte Ausgestaltungen hierzu angegeben. Die Erfindung geht dabei von folgenden Erkenntnissen aus:

Wenn ein Terminal einen gut gefüllten Sendepuffer für eine bestimmte DLC-Verbindung hat und der Zentrale ZE diesen Füllstand mitteilt, fallen die Ressourcenzuweisungen entsprechend üppig aus, wenn z.B. andere Terminals wenig zu übertragen haben. Es kann nun vorkommen, daß das Terminal aus irgendwelchen Gründen nicht so viel Sendekapazität im Uplink haben möchte, wie es aufgrund des Füllstands seines Puffers und der aktuellen Lastsituation bekommen kann. Die Zentrale ZE kann dies nicht wissen und teilt dem Terminal also mehr Sendekapazität zu, als es gebrauchen kann. Für den Empfangsfall ist es möglich, das eingangs genannte ARQ-Protokoll für die Flußsteuerung in Empfangsrichtung zu verwenden. -

Durch eine üppige Zuweisung von Übertragungsressourcenkapazität kann es vorkommen, daß die Sende-/Empfangseinheit eines Terminals überhitzt ist und droht zerstört zu werden oder zumindest nicht mehr korrekt zu funktionieren. Dies kann insbesondere geschehen, wenn die Sende-/Empfangseinheit in Form einer PC-Karte in einem Laptop eingesetzt wird, wo es unter Umständen zusätzlich durch die Wärme innerhalb des Gehäuses erhitzt wird. In diesem Fall ist es nützlich, die Aktivität der Sende-/Empfangseinheit für eine bestimmte Zeit zu reduzieren, ohne daß die Funktionalität ganz verloren geht. Eine weitere Situation, wo eine Sendeflußsteuerung nach der Erfindung nützlich sein kann, ist das Stromsparen. Ein Terminal, dessen Batterieleistung langsam zur Neige geht, könnte den Stromverbrauch auf diese Weise reduzieren.

Ohne Flußsteuermechanismus in Senderichtung kann es zu Situationen kommen, wo einem Terminal Kapazität in Uplink- oder Direct Mode-Phase zugeteilt wird, die es aufgrund der zuvor angeführten Gründe nicht nutzen kann oder will. In diesem Fall würde diese zugeteilte Kapazität ungenutzt bleiben, obwohl es vielleicht andere Terminals gibt, die sie gut hätten nutzen können.

Eine Möglichkeit wäre, die Anzahl der Datenpakete in den RR-Nachrichten zu reduzieren. Dies allerdings würde dazu führen, daß die DLC-Verbindungen eines Terminals nicht nach ihrem Gewicht gegenüber anderen Terminals gewichtet würden, die ihre gesamte Anzahl Nachrichten im Sendepuffer bekannt geben. Dies kann zu ungerechter Ressourcenverteilung führen. Eine weitere Möglichkeit wäre, daß ein Terminal bei der Einbuchung bei einer Zentrale ZE (Assoziierung) mitteilt, daß es grundsätzlich nur einen bestimmten Prozentsatz des MAC-Rahmens emfangen bzw. senden möchte. Dies hat den Nachteil, daß das Terminal auch dann, wenn es leicht den gesamten MAC-Rahmen oder zumindest einen Großteil verwenden kann, diesen nicht zugeteilt bekommt. Dies passiert z.B. dann, wenn die Sende-/Empfangseinheit längere Zeit nicht aktiv war und deswegen kühl genug ist, oder wenn das Terminal am Netz hängt bzw. die Batterie voll gefüllt ist.

### Zeichnungen

Anhand der weiteren Figuren werden Ausführungsbeispiele der Erfindung erläutert. Es zeigen
Figur 2 einen MAC-Rahmen und dessen Inhalt,
Figur 3 einen MAC-Rahmen mit Direct-Mode-Phase,
Figur 4 einen MAC-Rahmen mit sektorisierten Antennen,
Figur 5 eine Funkzelle mit einer Zentrale und drei Terminals,
Figur 6 eine Aufeinanderfolge von vier MAC-Rahmen mit gesetzten R-Bits,
Figur 7 eine Aufeinanderfolge von vier weiteren MAC-Rahmen mit nicht mehr gesetzten R-Bits,
Figur 8 eine Anordnung für die R-Bit Steuerung.

### Beschreibung von Ausführungsbeispielen

Vor der eigentlichen Beschreibung der Erfindung wird zum besseren Verständnis der Aufbau der Übertragungsrahmen, insbesondere nach dem MAC-Kanalzugriffsprotokoll näher erläutert.

Die Kommunikation erfolgt in einzelnen MAC-Rahmen (Frames) fester Dauer gemäß Figur 2. Jeder MAC-Rahmen ist wiederum eingeteilt in eine Broadcast-Phase BC, eine Downlink-Phase DL, eine Uplink-Phase UL und eine Random Access Phase RA. Während der Broadcast-Phase BC sendet die Zentrale ZE Informationen, die relevant für alle Terminals T1, T2 ... sind, z.B. Name und Adresse der Zentrale ZE, Ankündigung von Aussendungen in Down- und Uplink, Position der Random Access Phase. In der Downlink-Phase sendet die Zentrale ZE Daten an einzelne Terminals, in der Uplink-Phase senden einzelne Terminals Daten an die Zentrale ZE. In der Random Access Phase RA können Terminals, die keine Übertragungskapazität im Uplink zugewiesen haben, Nachrichten an die Zentrale ZE senden. Dabei greifen sie wahlfrei zu, so daß es zu Kollisionen kommen kann.

Figur 3 zeigt die Einbindung einer weiteren Phase in die MAC-Rahmen, die die direkte Kommunikation der Terminals untereinander erlaubt. Diese Phase heißt Direct Mode-Phase. Das sich ergebende Format des MAC-Rahmens zeigt Figur 3. Hierbei ist die genaue Reihenfolge der Phasen nicht relevant.

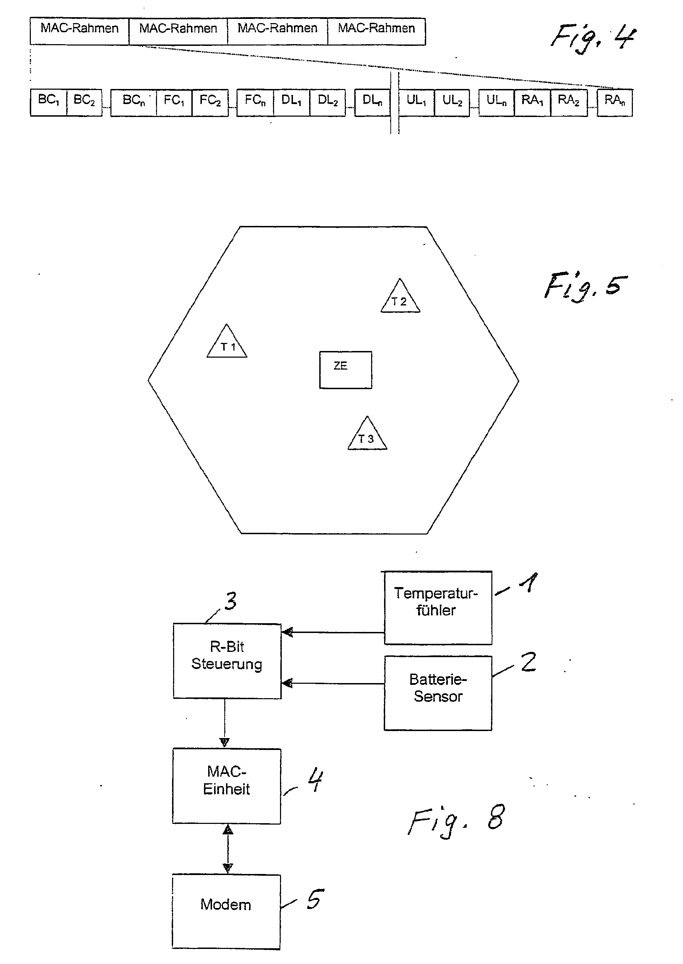

Bei der Einbeziehung sektorisierter Antennen in die Funkübertragung wird pro MAC-Rahmen genau eine Broadcast Phase und je keine oder eine weitere Phase pro Sektor bereitgestellt. Dies ist in Figur 4 dargestellt. Die Indizes beziehen sich hierbei auf die Sektoren FC, d.h. FC₁ bezieht sich auf Sektor 1, FC₂ auf Sektor 2. Die Broadcast-Phase BC aus Figur 2 wird hierbei in die zwei Phasen BC-Phase und FC-Phase aufgeteilt, die im MAC-Rahmen zeitlich getrennt auftreten.

Das Verfahren nach der Erfindung beruht im wesentlichen darauf, daß ein Terminal T1, T2 ... selbst entscheidet, daß es nur eine reduzierte Übertragungsressourcenkapazität zumindest in der Senderichtung nutzen möchte und diese Entscheidung der Zentrale ZE mitteilt, damit diese die nichtgenutzte Kapazität ggf. anderen Terminals zuteilen kann. Zu diesem Zweck wird in der RR (Resource Request)-Nachricht eine Information, insbesondere ein Bit eingefügt, mit dessen Hilfe der Zentrale ZE mitgeteilt werden kann, daß das Terminal nur einen Teil eines MAC-Rahmens senden möchte. Dieses Bit wird im folgenden Reduktionsbit (R-bit) genannt. Wenn das Bit nicht gesetzt ist, kann die Zentrale ZE dem Terminal beliebige Anteile des MAC-Rahmens zum Senden zuteilen. Wenn das Bit gesetzt ist, darf die Zentrale ZE dem Terminal nur einen Teil des MAC-Rahmens zum Senden zuteilen.

Erfindungsgemäß ist vorgesehen, daß der Betrag der Reduktion sich auf die Dauer des MAC-Rahmens bezieht. Um eine erhebliche Reduktion zu erreichen, wird vorteilhafterweise festgelegt, daß die Zentrale ZE dem Terminal bei gesetztem R-bit maximal 20% des MAC-Rahmens zum Senden zuweisen wird. Diese Größe bezieht sich auf die Dauer des MAC-Rahmens, ist also nicht notwendigerweise von der Datenrate oder anderen Größen abhängig (dies gilt vor allem auch für Link Adaption). Die Reduktion bezieht sich hierbei auf die Summe der Aussendezeit in Uplink- und auf die Direct Mode-Phase und bezieht sich auf ein Terminal, unabhängig von der Anzahl der bestehenden DLC-Verbindungen.

Die angesprochene Methode zur Flußsteuerung läßt sich insbesondere nur für den Sendeanteil eines Terminals verwenden. Für die Regelung in Bezug auf den Empfang von Datenpaketen kann die im bekannten ARQ-Mechanismus vorgesehene Flußsteuerung verwendet werden.

Das Terminal kann das R-Bit zu einem beliebigen Zeitpunkt und auf eigene Entscheidung hin setzen. Da die Verwendung des R-Bits sich auf das Terminal bezieht, sollte das Terminal das R-Bit bei allen RR-Nachrichten für alle aktiven Verdindungen setzen. Das Setzen sollte im Hinblick auf Verbindungen, die eine bestimmte Dienstgüte (Quality of Service) erfordern, nur dann geschehen, wenn es die Verkehrsverträge erlauben. Daher sollte ein Terminal, das mit Überhitzung rechnen muß, keine Verbindungen aufbauen, die eine dauerhafte Datenrate erfordern, für die mehr als 20% des MAC-Rahmens verwendet werden müssen.

Wenn die Zentrale ZE entdeckt, daß das R-Bit in einer RR-Nachricht eines Terminals gesetzt ist, soll sie im nächsten darauffolgenden MAC-Rahmen, der unter Einbeziehung der Verarbeitungsdauer möglich ist, die Sendezuweisungen an das Terminal auf maximal 20% reduzieren. Wenn während dieser Phase das R-Bit in einem MAC-Rahmen in keiner RR-Nachricht des Terminals gesetzt ist, soll die Zentrale ZE im nächsten darauffolgenden MAC-Rahmen, der unter Einbeziehung der Verarbeitungsdauer möglich ist, die Reduktion der Datenrate auf 20 % aufheben.

In einer Ausgestaltung gemäß Figur 5 ist eine Funkzelle dargestellt mit einer Zentrale ZE in der Mitte und drei Terminals T1, T2 und T3. Es sei angenommen, daß jeder MAC-Rahmen, den die Zentrale ZE aufspannt, Kapazität für jeweils 70 Nachrichten enthält, die von der Zentrale ZE beliebig auf Uplink und Downlink-Phase verteilt werden können (vgl. Figur 2).

Die Terminals haben jeweils 2 DLC-Verbindungen geöffnet, eine Verbindung für Steuersignalisierung und eine weitere Verbindung für Nutzdaten. Terminal T1 ist so implementiert, daß es zuweilen zu thermischen Problemen kommt, während die Terminals T2 und T3 keine thermischen Probleme haben.

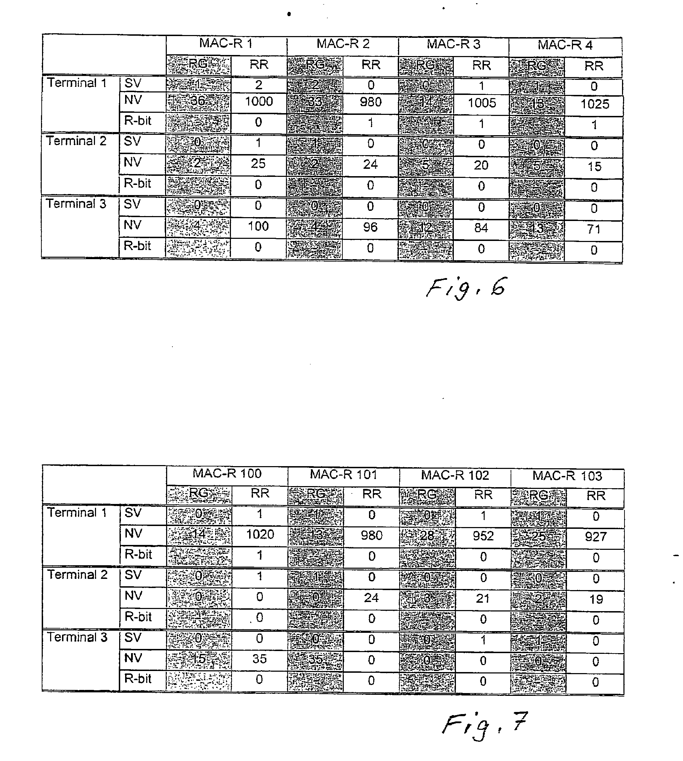

Beispielhafte Vorgänge sind in Figur 6 und in Figur 7 dargestellt. Die Steuerverbindung ist mit SV, die Nutzverbindung mit NV, Ressourcenanforderungen mit RR (Resource Request), Ressourcenzuweisung mit RG (Resource Grant) und MAC-Rahmen mit MAC-R bezeichnet. Die RGs beziehen sich nur auf die Sendemöglichkeiten im Uplink. Der restliche Teil der Sendemöglichkeiten für die Zentrale ZE im Downlink sind nicht dargestellt, so daß nicht die ganzen 70 möglichen Nachrichtenpakete in der Figur auftreten.

Aufgrund der Dringlichkeit werden Steuerverbindungen grundsätzlich bevorzugt behandelt. Ansonsten sind die Nutzverbindungen der verschiedenen Terminals gleichberechtigt. Daher hängt die Anzahl zugewiesener Sendemöglichkeiten im Uplink nur von der Anzahl der Nachrichtenpakete im Sendepuffer ab.

Das Terminal 1 hat einen sehr vollen Sendepuffer und bekommt daher in den Rahmen 1 und 2 den Hauptanteil der Sendemöglichkeiten zugewiesen. Terminal T2 und T3 haben vergleichsweise geringe Füllstände und daher auch weniger Sendemöglichkeiten.

In MAC-Rahmen 2 tritt in Terminal T1 eine Überhitzung ein, so daß es das R-Bit setzt. Im darauffolgenden MAC-Rahmen weist die Zentrale ZE Terminal T1 die zulässigen 20 % der Zeit an, also 14 Sendemöglichkeiten. Da permanent neue Nachrichtenpakete im Sendepuffer von Terminal T1 ankommen, wächst der Pufferstand an. Das Terminal muß in diesem Falle selbst dafür sorgen, daß der Nachrichtenfluß eingeschränkt wird, wenn die Puffer überzulaufen drohen. Hierzu kann ein interner Mechanismus bekannter Art verwendet werden, der hier aber nicht relevant ist.

Die Terminals T2 und T3 bekommen eine vergleichsweise geringe Anzahl an Sendemöglichkeiten zugewiesen. Diese Anzahl erhöht sich allerdings mit MAC-Rahmen 3, in dem Terminal T1 aufgrund des gesetzten R-Bits weniger Kapazität zugewiesen bekommt.

Diese Situation dauert an bis MAC-Rahmen 101, siehe Figur 7. Die Überhitzung in Terminal T1 ist dann soweit abgekühlt, daß es wieder voll arbeiten kann. Es nimmt das R-Bit weg, worauf es im folgenden MAC-Rahmen 102 eine erhöhte Zuweisung von Sendemöglichkeiten erhält. Durch die höhere Anzahl der Pakete in Terminal T1 wird daher im MAC-Rahmen 102 Terminal T2, das gerade einen Satz Nachrichtenpakete verschicken möchte, nur eine relativ geringe Anzahl an Sendemöglichkeiten zugewiesen.

Im folgenden wird eine mögliche Anordnung im Terminal zur Realisierung des erfindungsgemäßen Verfahrens angegeben. Wie zuvor ausgeführt, kann das Setzen des R-Bits durch Überhitzung ausgelöst werden. Außerdem kann es möglich sein, daß dies durch eine leere Batterie ausgelöst wird. Figur 8 zeigt die notwendigen Funktionseinheiten hierzu und ihre Beziehungen.

Die R-Bit Steuerung ist mit einem Temperaturfühler 1 und einem Batteriesensor 2 verbunden. Wenn einer der beiden Sensoren ein Signal auf der Verbindung zur R-Bit Steuerung 3 sendet, gibt diese die Information an die MAC-Einheit 4 bzw. zum Modem 5 weiter. Die wiederum setzt das R-Bit in den darauf folgenden Ressourcenanforderungen.

Das Reduktionsverfahren wurde bisher für ein einzelnes Bit beschrieben. Es ist natürlich auch möglich, mehrere Bits für diesen Zweck zu verwenden. Werden z.B. 2 Bits verwendet, sind insgesamt 4 verschiedene Kodierungen möglich. Jede Kodierung steht dann für eine Reduktion der Senderate eines Terminals auf einen bestimmten Prozentsatz der Dauer des MAC-Rahmens. Es ist z.B. folgende Kodierung der Bits möglich: 00 - Keine Reduktion; 01 - Reduktion auf 75%; 10 - Reduktion auf 50%; 11 - Reduktion auf 25%.

Das Verfahren zur Sendeflußsteuerung wurde für ein Kommunikationssystem beschrieben, in dem die Ressourcenanforderungen und Ressourcenzuweisungen auf Basis von DLC-Verbindungen erfolgen. Es ist aber auch möglich, solche Systeme so zu bauen, daß die Ressourcenanforderungen und - zuweisungen auf anderer Basis erfolgen. Solche Möglichkeiten sind:
- Ressourcenanforderungen auf Basis bestimmter Eigenschaften der DLC-Verbindungen, z.B. auf Basis von Verkehrsklassen, Dienstgüteklassen oder für ein ganzes Terminal,
- Ressourcenzuweisungen auf Basis von Verkehrsklassen, Dienstgüteklassen oder pro Terminal.

Das Verfahren nach der Erfindung kann auch in beliebigen nachfolgender Fälle eingesetzt werden:

In der bisherigen Beschreibung wurde die Reduktion der Datenrate eines Terminals im Sendefall durch das R-Bit und im Empfangsfall durch die ARQ-Flußregelung gesteuert. Es ist aber ebenso möglich, daß sowohl Sende- als auch Empfangsfluß durch die beschriebene Reduzierung der Übertragungsressourcenkapazität geregelt werden.

Die zuvor ausgeführten Ausführungsbeispiele beziehen sich auf ein System, in dem pro MAC-Rahmen eine konstante Anzahl von Paketen versendet werden kann. Das System ist aber auch genausogut in Fällen einsetzbar, wo die Anzahl der Pakete pro MAC-Rahmen variabel ist. Ein Grund dafür können z.B. flexible Modulations- und Kanalkodierungsverfahren sein, die sich von MAC-Rahmen zu MAC-Rahmen ändern können und für jedes Terminal individuell bestimmt werden können.

Im zuvor beschriebenen Verfahren gilt das Setzen des, bzw. der R-Bits für ein gesamtes Terminal. Da das R-Bit, bzw. die R-Bits in Ressourcenanforderungen versendet werden, die für eine DLC-Verbindung gelten, ist es ebenso möglich, die Reduktion auf eine einzelne DLC-Verbindung zu beziehen, statt auf das ganze Terminal.

Im gezeigten Ausführungsbeispiel wird das R-Bit dann aktiv, wenn es gleich 1 ist. Es ist aber ebenso möglich, daß es aktiv ist, wenn es zu 0 gesetzt wird.

Es wurde zuvor beschrieben, daß das MAC-Protokoll für sektorisierte Antennen und/oder mit einer Direct Mode Phase verwendet werden kann. Das Verfahren nach der Erfindung ist auch für diese Anwendung geeignet.

Bisher wurde davon ausgegangen, daß der Anteil des MAC-Rahmens, der bei gesetztem R-Bit genutzt werden darf, festgelegt wird. Es ist aber auch möglich, diesen prozentualen Anteil zwischen Zentrale ZE und Terminal zu irgendeinem Zeitpunkt zu verhandeln und sogar während des Betriebs neu zu verhandeln.

### Literatur:

[1] Deutsche Patentanmeldung 197 26 120.5
[2] D. Petras, A. Krämling, "MAC protocol with polling and fast collision resolution for an ATM air interface", IEEE ATM Workshop, San Francisco, CA, August 1996
[3] D. Petras, A. Krämling, A. Hettich, "MAC protocol for Wireless ATM: contention free versus contention based transmission of reservation requests", PIMRC' 96, Taipei, Taiwan, October 1996

## Patentansprüche

1. Verfahren zur Steuerung des Datenflusses von Terminals in zentral gesteuerten Kommunikationssystemen, wobei eine Übertragungsressourcenzuweisung durch eine Zentrale (ZE) an die Terminals (T1, T2 ...) des Kommunikationssystems erfolgt, wobei unabhängig von den zugewiesenen Übertragungsressourcen ein Terminal (T1, T2 ...) entscheidet, dass es nur eine reduzierte Übertragungsressourcenkapazität zumindest in Senderichtung nutzen möchte und wobei die Entscheidung über die Reduzierung der Übertragungsressourcenkapazitätfür nachfolgenden Übertragungsrahmen der Zentrale (ZE) vom Terminal (T1, T2 ...) mitgeteilt wird, die diese nicht genutzte Kapazität ggf. anderen Terminals zuteilen kann, **dadurch gekennzeichnet, dass** eine Information vom Terminal zur Zentrale (ZE) übertragen wird, die auf eine reduzierte Menge an Sendemöglichkeiten hinweist, die aus mindestens einem Reduktionsbit besteht, welches im gesetzten oder alternativ im ungesetzten Zustand der Zentrale (ZE) signalisiert die Übertragungsressourcenkapazität für das betreffende Terminal (T1, T2 ...) zu reduzieren.

2. Verfahren nach Anspruch 1, **dadurch gekennzeichnet, dass** in eine Ressourcenanforderungsnachricht (RR) eines Terminals (T1, T2 ...) innerhalb eines Übertragungsrahmens die Information eingefügt wird, die darauf hinweist, dass ein Terminal (T1, T2 ...) eine reduzierte Menge an Sendemöglichkeiten in einer Uplink-Phase (Kommunikation von einem Terminal zur Zentrale) und/oder in einer Direct Mode-Phase (direkte Kommunikation von Terminals untereinander) zugeteilt bekommen möchte.

3. Verfahren nach Anspruch 1 oder 2, **dadurch gekennzeichnet, dass** die von der Zentrale (ZE) einem Terminal (T1, T2 ...) zugewiesene Übertragungsressourcenkapazität aufgrund des Füllstandes seines Sendepuffers zugeteilt wird.

4. Verfahren nach einem der Ansprüche 1 bis 3, **dadurch gekennzeichnet, dass** zur Steuerung des Empfangsflusses ein an sich bekanntes Flußsteuerprotokoll, z.B. ein ARQ (Automatic Repeat Request) -Protokoll, verwendet wird.

5. Verfahren nach einem der Ansprüche 1 bis 4, **dadurch gekennzeichnet, dass** der Betrag der Reduktion der Übertragungsressourcenkapazität insbesondere unabhängig von der Datenrate und/oder der Anzahl aktiver Verbindungen gewählt wird und auf die Dauer eines Übertragungsrahmens, z.B. nach dem MAC (Medium Access Control) - Kanalzugriffsprotokoll, bezogen wird.

6. Verfahren nach Anspruch 5, **dadurch gekennzeichnet, dass** der Betrag der Reduktion der Übertragungsressourcenkapazität in Abhängigkeit der Summe der Sendezeit in der Uplink- und/oder Direct-Mode-Phase gewählt wird.

7. Verfahren nach einem der Ansprüche 1 bis 6, **dadurch gekennzeichnet, dass** die Reduzierung der Übertragungsressourcenkapazität mittels mindestens eines Sensors (1, 2) im Terminal (T1, T2 ...) gesteuert wird.

8. Verfahren nach Anspruch 7 **dadurch gekennzeichnet, dass** als Sensor (1, 2) ein Temperatursensor (1) und/oder ein Batteriesensor (2) vorgesehen ist.

9. Verfahren nach einem der Ansprüche 2 bis 8, **dadurch gekennzeichnet, dass** die Information, die auf eine reduzierte Menge an Sendemöglichkeiten hinweist, aus mehr als einem Bit gebildet wird und dass aus der Anzahl der zur Verfügung gestellten Bits eine Codierung vorgenommen wird für unterschiedliche Reduzierungsfaktoren in Abhängigkeit der Dauer eines Übertragungsrahmens/MAC-Rahmens.

10. Verfahren nach einem der Ansprüche 1 bis 9, **dadurch gekennzeichnet, dass** die Ressourcenanforderungen und Ressourcenzuweisungen auf der Basis einzelner DLC-Verbindungen vorgenommen werden oder in Abhängigkeit bestimmter Eigenschaften dieser DLC-Verbindungen, z.B. auf der Basis von Verkehrsklassen, Dienstegüteklassen oder für ein ganzes Terminal.

11. Verfahren nach einem der Ansprüche 1 bis 3 oder 5 bis 10, **dadurch gekennzeichnet, dass** sowohl die Steuerung des Sendeflusses als auch des Empfangsflusses aufgrund der Entscheidung eines Terminals (T1, T2 ...) reduzierte Übertragungsressourcenkapazität zugeteilt zu bekommen, gesteuert wird.

12. Verfahren nach einem der Ansprüche 1 bis 11, **dadurch gekennzeichnet, dass** die Reduzierung der Übertragungsressourcenkapazität entweder auf ein gesamtes Terminal bezogen wird oder auf einzelne DLC-Verbindungen.

13. Verfahren nach einem der Ansprüche 1 bis 12, **dadurch gekennzeichnet, dass** unabhängig von der Entscheidung über die Reduzierung der Übertragungsressourcenkapazität und der entsprechenden Mitteilung an die Zentrale (ZE) die Reduzierung der Übertragungsressourcenkapazität und der Reduzierungsfaktor neu verhandelbar ist insbesondere auch während des Betriebs.

## Claims

1. Method for controlling the flow of data from terminals in centrally controlled communication systems, wherein a transmission resource allocation is made by a control centre (ZE) to the terminals (T1, T2 ...) in the communication system, wherein, irrespective of the allocated transmission resources, a terminal (T1, T2 ...) decides that it wishes to use only a reduced transmission resource capacity at least in the transmission direction and wherein the decision about the reduction in the transmission resource capacity for subsequent transmission frames is communicated to the control centre (ZE) by the terminal (T1, T2 ...), said control centre being able to allocate this unused capacity to other terminals if necessary, **characterized in that** information is transmitted from the terminal to the control centre (ZE) which indicates a reduced set of transmission options which comprises at least one reduction bit which, in the set state or alternatively in the unset state, signals to the control centre (ZE) that it needs to reduce the transmission resource capacity for the relevant terminal (T1, T2 ...).

2. Method according to Claim 1, **characterized in that** a resource request message (RR) from a terminal (T1, T2 ...) has the information inserted into it, within a transmission frame, indicating that a terminal (T1, T2 ...) wishes to be allocated a reduced set of transmission options in an uplink phase (communication from a terminal to the control centre) and/or in a direct mode phase (direct communication among terminals).

3. Method according to Claim 1 or 2, **characterized in that** the transmission resource capacity allocated to a terminal (T1, T2 ...) by the control centre (ZE) is allocated on the basis of the fill level of the transmission buffer of said terminal.

4. Method according to one of Claims 1 to 3, **characterized in that** the reception flow is controlled using an inherently known flow control protocol, e.g. an ARQ (Automatic Repeat Request) protocol.

5. Method according to one of Claims 1 to 4, **characterized in that** the absolute value of the reduction in the transmission resource capacity is chosen particularly irrespective of the data rate and/or the number of active connections and is related to the duration of a transmission frame, e.g. on the basis of the MAC (Medium Access Control) channel access protocol.

6. Method according to Claim 5, **characterized in that** the absolute value of the reduction in the transmission resource capacity is chosen on the basis of the sum of the transmission time in the uplink phase and/or direct mode phase.

7. Method according to one of Claims 1 to 6, **characterized in that** the reduction in the transmission resource capacity is controlled by means of at least one sensor (1, 2) in the terminal (T1, T2 ...).

8. Method according to Claim 7, **characterized in that** the sensor (1, 2) provided is a temperature sensor (1) and/or a battery sensor (2).

9. Method according to one of Claims 2 to 8, **characterized in that** the information indicating a reduced set of transmission options is formed from more than one bit and **in that** the number of provided bits is used to perform coding for different reduction factors on the basis of the duration of a transmission frame/MAC frame.

10. Method according to one of Claims 1 to 9, **characterized in that** the resource requests and resource allocations are made on the basis of single DLC connections or on the basis of particular properties of said DLC connections, e.g. on the basis of traffic classes, quality-of-service classes or for an entire terminal.

11. Method according to one of Claims 1 to 3 or 5 to 10, **characterized in that** the control of both the transmission flow and the reception flow is controlled on the basis of the decision by a terminal (T1, T2 ...) to be allocated reduced transmission resource capacity.

12. Method according to one of Claims 1 to 11, **characterized in that** the reduction in the transmission resource capacity is related either to an entire terminal or to single DLC connections.

13. Method according to one of Claims 1 to 12, **characterized in that** irrespective of the decision about the reduction in the transmission resource capacity and irrespective of the relevant communication to the control centre (ZE), the reduction in the transmission resource capacity and the reduction factor are renegotiable, particularly also during operation.

## Revendications

1. Procédé de commande du flux de données de terminaux dans des systèmes de communication à commande centrale, dans lequel
une centrale (ZE) attribue des ressources de transmission aux terminaux (T1, T2, ...) du système de communication,
un terminal (T1, T2, ...) décidant indépendamment des ressources de transmission qui lui sont attribuées qu'il ne souhaite utiliser qu'une capacité réduite des ressources de transmission au moins dans la direction d'émission,
la décision concernant la réduction de la capacité de ressources de transmission pour des trames suivantes de transmission étant communiquée à la centrale (ZE) par le terminal (T1, T2, ...), la centrale pouvant éventuellement attribuer cette capacité inutilisée à d'autres terminaux,
**caractérisé en ce**
**qu'**une information qui indique une quantité réduite de possibilités d'émission et qui est constituée d'au moins un bit de réduction qui, lorsqu'il est présent ou en variante absent, signale à la centrale (ZE) de réduire la capacité de ressources de transmission pour le terminal concerné (T1, T2, ...), est transmise du terminal à la centrale (ZE).

2. Procédé selon la revendication 1, **caractérisé en ce que** l'information qui indique qu'un terminal (T1, T2, ...) souhaite se voir attribuer une quantité réduite de possibilités d'émission dans une phase montante (communication d'un terminal à la centrale) et/ou dans une phase en mode direct (communication directe entre des terminaux) est insérée dans une trame de transmission d'un message (RR) de demande de ressources d'un terminal (T1, T2, ...).

3. Procédé selon la revendication 1 ou 2, **caractérisé en ce que** la capacité de ressources de transmission attribuée par la centrale (ZE) à un terminal (T1, T2, ...) est attribuée en fonction de l'état de remplissage d'un tampon d'émission.

4. Procédé selon l'une des revendications 1 à 3, **caractérisé en ce qu'**un protocole intrinsèquement connu de commande de flux, par exemple un protocole ARQ ("Automatic Repeat Request" - demande de répétition automatique) est utilisé pour commander le flux de réception.

5. Procédé selon l'une des revendications 1 à 4, **caractérisé en ce que** le niveau de réduction de la capacité de ressources de transmission est sélectionné notamment de manière indépendante du débit de données et/ou du nombre de liaisons actives et est rapporté à la durée d'une trame de transmission, par exemple selon le protocole d'accès aux canaux MAC ("Medium Access Control" - commande d'accès aux canaux).

6. Procédé selon la revendication 5, **caractérisé en ce que** le niveau de réduction de la capacité de ressources de transmission est sélectionné en fonction de la somme des durées d'émission en phase montante et/ou en phase de mode direct.

7. Procédé selon l'une des revendications 1 à 6, **caractérisé en ce que** la réduction de la capacité des ressources de transmission est commandée au moyen d'au moins un détecteur (1, 2) prévu dans le terminal (T1, T2, ...).

8. Procédé selon la revendication 7, **caractérisé en ce qu'**une sonde de température (1) et/ou une sonde de batterie (2) sont prévues comme sondes (1, 2).

9. Procédé selon l'une des revendications 2 à 8, **caractérisé en ce que** l'information qui indique une diminution de la quantité de possibilités d'émission est formée de plus d'un bit et **en ce qu'**à partir du nombre des bits disponibles, un codage est entrepris pour différents facteurs de réduction en fonction de la durée d'une trame de transmission MAC.

10. Procédé selon l'une des revendications 1 à 9, **caractérisé en ce que** les demandes de ressources et les attributions de ressources sont réalisées sur la base de certaines liaisons DLC ou en fonction de propriétés définies de ces liaisons DLC, par exemple sur la base de classes de trafic, de classes de qualité de service ou pour un terminal entier.

11. Procédé selon l'une des revendications 1 à 3 ou 5 à 10, **caractérisé en ce que** tant la commande du flux d'émission que celle du flux de réception sont réalisées sur la base de la décision d'un terminal (T1, T2, ...) de se voir attribuer une capacité réduite de ressources de transmission.

12. Procédé selon l'une des revendications 1 à 11, **caractérisé en ce que** la réduction de la capacité des ressources de transmission est rapportée à un terminal entier ou à certaines liaisons DLC.

13. Procédé selon l'une des revendications 1 à 12, **caractérisé en ce qu'**indépendamment de la décision concernant la réduction de la capacité de ressources de transmission et de sa communication à la centrale (ZE), la réduction de la capacité de ressources de transmission et le facteur de réduction peuvent être renégociés, en particulier également en fonctionnement.
